# EUROPÄISCHE PATENTSCHRIFT

(11) **EP 3 424 994 B1**
(45) Veröffentlichungstag und Bekanntmachung des Hinweises auf die Patenterteilung: **08.04.2020**
(21) Anmeldenummer: 17180042.8
(22) Anmeldetag: 06.07.2017
(51) Int. Cl.: C08K 7/02, C08J 5/04

(54) **FASERN ENTHALTENDES FÜLLSTOFFPARTIKEL MIT VERBESSERTER VERANKERUNG IN EINER POLYTETRAFLUORETHYLENMATRIX**
FILLER PARTICLES CONTAINING FIBRES, WITH IMPROVED ANCHORING IN A POLYTETRAFLUORETHYLENE MATRIX
PARTICULES DE CHARGE COMPRENANT DES FIBRES, AYANT UN MEILLEUR ANCRAGE DANS UNE MATRICE EN POLYTÉTRAFLUOROÉTHYLÈNE

(43) Veröffentlichungstag der Anmeldung: 09.01.2019
(73) Patentinhaber: Burckhardt Compression AG, 8404 Winterthur (CH)
(72) Erfinder: Olliges-Stadler, Inga, 8352 Elsau (CH)
(74) Vertreter: Dr. Graf & Partner AG

(56) Entgegenhaltungen:
- EP-A1- 2 634 207
- US-A- 4 026 863
- US-A1- 2008 305 329
- HARSHA A P ET AL: "Erosive wear studies of epoxy-based composites at normal incidence", WEAR, ELSEVIER SEQUOIA, LAUSANNE, CH, Bd. 265, Nr. 7-8, 20. September 2008 (2008-09-20), Seiten 1129-1135, XP022707239, ISSN: 0043-1648, DOI: 10.1016/J.WEAR.2008.03.003 [gefunden am 2008-04-22]

## Beschreibung

Die vorliegende Erfindung betrifft ein Fasern enthaltendes Füllstoffpartikel, einen Verbundwerkstoff aus einer Matrix aus Polytetrafluorethylen, wobei in der Matrix diese Fasern enthaltenden Füllstoffpartikel dispergiert sind, sowie ein Verfahren zum Herstellen solcher Fasern enthaltenden Füllstoffpartikeln.

Polytetrafluorethylen (PTFE) zeichnet sich durch einen außergewöhnlich breiten thermischen Anwendungsbereich aus, ist nahezu universell chemisch beständig und weist eine hervorragende Beständigkeit gegen Licht, Witterung und Heißwasserdampf auf. Zudem zeichnet sich PTFE durch sehr gute Gleiteigenschaften, ein hervorragendes antiadhäsives Verhalten, durch gute elektrische und durch gute dielektrische Eigenschaften aus, weswegen PTFE für eine Vielzahl von Anwendungen und insbesondere als Dichtungsmaterial begehrt ist. Allerdings weist PTFE eine vergleichsweise geringe mechanische Stabilität sowie vergleichsweise schlechte Kriech- und Kaltflusseigenschaften auf, weswegen PTFE für viele Anwendungen nicht in reiner Form eingesetzt werden kann, sondern mit Füllstoffen verstärkt, in dem in einer PTFE-Matrix anorganischer Füllstoff, organischer Füllstoff und/oder Fasern dispergiert sind. Beispiele für geeignete Füllstoffe und Fasern sind Glasfasern, Kohlepulver, Graphit und Carbonfasern. Dabei führt der Zusatz des bzw. der Füllstoff(e) zu einer Verbesserung der mechanischen Eigenschaften des Verbundwerkstoffs. US 4026863 A offenbart Fluorkohlenstoff-Polymer-Verbundwerkstoffe mit einer mit Polyphenylensulfid behandelten Füllstoffoberfläche.

Allerdings zeigt PTFE nicht nur an seiner Oberfläche eine geringe Haftung zu anderen Materialien, sondern auch zu den meisten kommerziell interessanten Füllstoffen und insbesondere zu Polymerfüllstoffen. Dies kann sogar dazu führen, dass das Verschleißverhalten von Zusammensetzungen aus PTFE und Füllstoff schlechter ist als das von ungefülltem PTFE. Zur Verbesserung der Haftung von Füllstoffen mit PTFE ist bereits der Zusatz von Haftvermittlern in solchen Verbundwerkstoffen vorgeschlagen worden. Allerdings können solche Haftvermittler zu unerwünschten Reaktionen führen und sind bei einigen Anwendungen, insbesondere unter Sauerstoffbedingungen, nicht einsetzbar.

Ausgehend davon liegt der vorliegenden Erfindung die Aufgabe zugrunde, einen Polymerfüllstoff für PTFE bereitzustellen, welcher sich durch eine verbesserte Haftung mit PTFE auszeichnet.

Diese Aufgabe wird erfindungsgemäß gelöst durch ein Fasern enthaltendes Füllstoffpartikel, bei dem zwei oder mehr Fasern zumindest teilweise in einem Feststoffpartikel aus einem Polymer ausgewählt aus der Gruppe bestehend aus Polyphenylensulfiden, flüssigkristallinen Polymeren, Polyphenylensulfonen, Polyethersulfonen, thermoplastischen Polyimiden, Polyamidimiden, Epoxyharzen, Perfluoralkoxypolymer und beliebigen Mischungen aus zwei oder mehr der vorgenannten Polymere eingeschlossen sind, wobei zumindest ein Teil der Fasern mit ihrem dem in das Feststoffpartikel eingeschlossenen Ende gegenüberstehenden Ende aus dem Feststoffpartikel herausragen, wobei das Fasern enthaltende Füllstoffpartikel eine maximale Längsausdehnung von 1000 µm aufweist und die Fasern eine Dicke von maximal 100 µm aufweisen.

Diese Lösung beruht auf der überraschenden Erkenntnis, dass durch partielles Einschließen von Fasern, die keine zu hohe Dicke aufweisen, in einem Partikel aus einem Polymer ausgewählt aus der Gruppe bestehend aus Polyphenylensulfiden, flüssigkristallinen Polymeren, Polyphenylensulfonen, Polyethersulfonen, thermoplastischen Polyimiden, Polyamidimiden, Epoxyharzen, Perfluoralkoxypolymer und beliebigen Mischungen aus zwei oder mehr der vorgenannten Polymere derart, dass zumindest ein Teil der Fasern mit ihrem dem in das Feststoffpartikel eingeschlossenen Ende gegenüberstehenden Ende aus dem Feststoffpartikel herausragen, die Haftung des Polymerpartikels mit PTFE beträchtlich verbessert werden kann. Dies wird durch die aus dem Polymerpartikel herausragenden Faserenden erreicht, die im Prinzip als physikalische Haftvermittler dienen, weil sie das Polymerpartikel in der PTFE-Matrix mechanisch verankern. Im Prinzip handelt es sich bei dem erfindungsgemäßen Füllstoffpartikel um eine igelförmige Struktur, wobei aus dem Polymerpartikel an der Oberfläche eine Vielzahl von Faserenden herausragt, was zu einer entsprechend rauen, die Haftung verbessernden Oberfläche des Partikels führt. Dabei binden die Fasern fester an den Polymerfüllstoff, in dem sie partiell eingeschlossen sind, als an das PTFE, so dass ein Loslösen der Fasern von dem Polymerfüllstoff zuverlässig verhindert wird.

Erfindungsgemäß wird als Polymer für das Feststoffpartikel Polyphenylensulfid, flüssigkristallines Polymer, Polyphenylensulfonen, Polyethersulfonen, thermoplastischen Polyimiden, Polyamidimiden, Epoxyharzen, Perfluoralkoxypolymer oder eine Mischung daraus eingesetzt. Gute Ergebnisse werden insbesondere mit Feststoffpartikeln erzielt, welche als Polymer Polyphenylensulfid enthalten. Polyphenylensulfid hält auch hohen Sintertemperaturen von mehr als 360°C, welche häufig zur Herstellung von PTFE-Bauteilen eingesetzt werden, stand. Zudem verbessert Polyphenylensulfid als Füllstoff die Kriech- und Kaltflusseigenschaften von PTFE.

Gemäß einer besonders bevorzugten Ausführungsform der vorliegenden Erfindung ist es vorgesehen, dass das Feststoffpartikel als Polymer vernetztes Polyphenylensulfid enthält. Dieses Material verhält sich duroplastisch und schmilzt nicht mehr, weswegen es besonders robust ist und die partiell eingeschlossenen Fasern besonders fest bindet.

Um den haftungsverstärkenden Effekt der aus dem Partikel herausragenden Fasern in besonders hohem Ausmaß zu erreichen, wird in Weiterbildung des Erfindungsgedankens vorgeschlagen, dass in dem Fasern enthaltendem Füllstoffpartikel mehr als 2, bevorzugt mehr als 5 und besonders bevorzugt mehr als 10 Fasern teilweise eingeschlossen sind.

Bezüglich der chemischen Natur der Fasern ist die vorliegende Erfindung nicht besonders limitiert. Insbesondere können die Fasern aus der Gruppe ausgewählt sein, die aus Carbonfasern, Glasfasern, Polymerfasern, Keramikfasern, Metallfasern und beliebigen Mischungen aus zwei oder mehr der vorgenannten Faserarten besteht. Gute Ergebnisse werden insbesondere mit Carbonfasern erzielt, welche nicht nur chemisch stabil sind, sondern sich auch durch eine besonders hohe Zugfestigkeit auszeichnen.

Um genügend Fasern in dem Füllstoffpolymerpartikel einbinden zu können, ist es ferner bevorzugt, dass die Fasern nicht zu dick sind. Gute Ergebnisse werden insbesondere mit Fasern erhalten, die eine Dicke von 1 bis 100 µm aufweisen. Weiter bevorzugt weisen die Fasern eine Dicke von 2 bis 75 µm, besonders bevorzugt von 5 bis 50 µm und ganz besonders bevorzugt von 6 bis 20 µm auf.

Um den haftungsverstärkenden Effekt der aus dem Partikel herausragenden Fasern in besonders hohem Ausmaß zu erreichen, wird es gemäß einer weiteren, besonders bevorzugten Ausführungsform der vorliegenden Erfindung vorgeschlagen, dass zumindest ein Teil der Fasern mit ihrem dem in das Feststoffpartikel eingeschlossenen Ende gegenüberstehenden Ende um 1 bis 100 µm und bevorzugt um 10 bis 50 µm aus dem Feststoffpartikel herausragen. Sofern das herausragende Ende zu kurz ist, ist der dadurch erzielte Verankerungseffekt zu gering. Wenn das herausragende Ende eine gewisse Länge überschreitet, trägt die zunehmende Länge nicht mehr zu einer Verbesserung der Haftung bei, führt jedoch aufgrund des vermehrten Fasermaterials insbesondere in dem Fall von Carbonfasern zu unnötig erhöhten Materialkosten.

Ebenfalls, um den haftungsverstärkenden Effekt der aus dem Partikel herausragenden Fasern in besonders hohem Ausmaß zu erreichen, ist es ferner bevorzugt, dass mindestens 2, bevorzugt mindestens 5 und besonders bevorzugt mindestens 10 Fasern mit ihrem dem in das Feststoffpartikel eingeschlossenen Ende gegenüberstehenden Ende aus dem Feststoffpartikel herausragen.

Außerdem ist es bevorzugt, dass das Fasern enthaltende Füllstoffpartikel eine maximale Länge von 1 bis 1000 µm, bevorzugt von 5 bis 500 µm und besonders bevorzugt von 10 bis 200 µm aufweist. Dies ermöglicht eine gute Dispergierung in dem PTFE-Material.

Bezüglich der Partikelform des Füllstoffpartikels ist die vorliegende Erfindung nicht besonders limitiert. So kann das Füllstoffpartikel sphärisch, ellipsoid, zylinderförmig oder irregulär geformt sein. Besonders gute Ergebnisse werden insbesondere mit irregulär geformten Füllstoffpartikel erzielt.

Ein weiterer Gegenstand der vorliegenden Erfindung ist ein Verbundwerkstoff aus einer Matrix aus Polytetrafluorethylen, wobei der Verbundwerkstoff in der Matrix die zuvor beschriebenen Fasern enthaltenden Füllstoffpartikel enthält.

Der Verbundwerkstoff kann beispielsweise 40 bis 90 Gew.-% und insbesondere 50 bis 70 Gew.-% PTFE und/oder modifiziertes PTFE, 5 bis 50 Gew.-% und insbesondere 10 bis 40 Gew.-% der zuvor beschriebenen Fasern enthaltenden Füllstoffpartikel sowie 0 bis 10 Gew.-% und insbesondere 1 bis 5 Gew.-% anorganische, nicht-faserförmige Füllstoffe wie Graphit, Kohle, Molybdändisulfid, Keramikpulver oder Metalle enthalten, wobei die Summe der Komponenten natürlich 100 Gew.-% beträgt.

Zudem betrifft die vorliegende Erfindung ein Verfahren zum Herstellen der zuvor beschriebenen Fasern enthaltenden Füllstoffpartikel. Erfindungsgemäß umfasst das Verfahren die folgenden Schritte:
a) Vermischen von Fasern mit einer Dicke von maximal 100 µm mit einem Polymer ausgewählt aus der Gruppe bestehend aus Polyphenylensulfiden, flüssigkristallinen Polymeren, Polyphenylensulfonen, Polyethersulfonen, thermoplastischen Polyimiden, Polyamidimiden, Epoxyharzen, Perfluoralkoxypolymer und beliebigen Mischungen aus zwei oder mehr der vorgenannten Polymere, wobei die Fasern einen höheren Schmelzpunkt aufweisen als das Polymer, um eine Faser-Polymer-Mischung zu erhalten,
b1) Schmelzen der in dem Schritt a) erhaltenen Faser-Polymer-Mischung auf eine Temperatur, die oberhalb der Schmelztemperatur des Polymers, aber unterhalb der Schmelztemperatur der Fasern liegt, um eine Faser-Schmelz-Mischung zu erhalten, oder
b2) Aushärten der Polymerkomponenten der in Schritt a) erhaltenen Faser-Polymer-Mischung durch chemische Reaktion zu einem Faser-Polymer-Komposit,
c) ggf. Abkühlen des in dem Schritt b1) oder b2) erhaltenen Faser-Polymer-Komposits, und
d) Zerkleinern des in dem Schritt c) erhaltenen Faser-Polymer-Komposits zu Fasern enthaltenden Füllstoffpartikeln mit einer maximalen Länge von 1000 µm.

Vorzugsweise wird in dem Schritt a) als Polymer ein Polyphenylensulfid eingesetzt und werden die Verfahrensschritte b1), c) und d) unter Luftatmosphäre durchgeführt, so dass das Polyphenylensulfid vernetzt. Wird in dem Schritt a) als Polymer ein Epoxidharz eingesetzt, vernetzt dieses im Schritt b2) durch chemische Reaktion der Epoxy-Gruppen mit dem in Schritt a) zugefügtem Härter. Je nach Art des Härters findet die Vernetzung bei Raumtemperatur, in diesem Fall entfällt Schritt c), oder in der Wärme bei Temperaturen zwischen 50 und 200°C statt.

In Weiterbildung des Erfindungsgedankens wird es vorgeschlagen, dass das Faser-Polymer-Komposit in dem Schritt d) zu Fasern enthaltenden Füllstoffpartikeln mit einer maximalen Länge von 1 bis 1000 µm, bevorzugt von 5 bis 500 µm und besonders bevorzugt von 10 bis 200 µm zerkleinert wird.

Dabei wird das Zerkleinern des Faser-Polymer-Komposits in dem Schritt c) vorzugsweise durch Mahlen oder durch Zerschlagen durchgeführt. Beim Zerschlagen werden die Fasern weniger beschädigt als beim Mahlen, weswegen das Zerkleinern des Faser-Polymer-Komposits in dem Schritt d) durch Zerschlagen besonders bevorzugt ist. Das Zerschlagen des Faser-Polymer-Komposits hat vorzugsweise zur Folge, dass die dadurch erzeugten Füllstoffpartikel individuell unterschiedliche Partikelformen aufweisen, und die Füllstoffpartikel somit irregulär, individuell unterschiedlich geformt sind.

Ferner betrifft die vorliegende Erfindung Fasern enthaltende Füllstoffpartikel, welche mit dem zuvor beschriebenen Verfahren erhältlich sind. Nachfolgend wird die vorliegende Erfindung anhand einer Figur beschrieben, welche die Erfindung erläutert, aber nicht beschränkt.

Dabei zeigt die einzige
- Fig.: schematisch einen Querschnitt eines Fasern enthaltenden Füllstoffpartikels gemäß einer Ausführungsform der vorliegenden Erfindung.

Das in der Fig. in einem Querschnitt gezeigte, Fasern enthaltende Füllstoffpartikel 10 ist irregulär, beispielsweise im Wesentlichen sphärisch geformt, und besteht aus einem Polyphenylensulfidpartikel 12, in das eine Vielzahl von Carbonfasern 14 teilweise eingeschlossen sind. Alle Carbonfasern 14 ragen mit ihrem dem in das Polyphenylensulfidpartikel 12 eingeschlossenen Ende gegenüberstehenden Ende aus dem Polyphenylensulfidpartikel 12 heraus. Somit weist das Fasern enthaltende Füllstoffpartikel 10 im Wesentlichen eine igelförmige Struktur auf, bei dem aus dem Polymerpartikel 12 an der Oberfläche eine Vielzahl von Faserenden herausragt, was zu einer entsprechend rauen, die Haftung mit PTFE verbessernden Oberfläche des Partikels 10 führt.

Nachfolgend wird die vorliegende Erfindung anhand eines Ausführungsbeispiels beschrieben, welches die Erfindung erläutert.

### Beispiel

800 g pulverförmiges Polyphenylensulfid wurden mit 400 g Carbonfasern mit einer Faserlänge von 150 µm und mit einem Faserdurchmesser von 15 µm vermischt und die so erhaltene Mischung wurde auf einem Metallblech verteilt. Anschließend wurde die Mischung auf dem Metallblech für 6 Stunden auf 300°C erhitzt, um das Polyphenylensulfid mit einem Schmelzpunkt von 285°C zu schmelzen. Anschließend wurde die Mischung abgekühlt und die erstarrte Fasern enthaltende Polymerschmelze beispielsweise mit einem Hochleistungsmixer umfassend ein Schlagwerk, Klingen oder Messer, oder beispielsweise mit einer Mühle zu Fasern enthaltenden Füllstoffpartikeln mit einem mittleren Durchmesser von 50 µm zerkleinert.

Anschließend wurde folgende Mischung hergestellt:
63 Gew.-% PTFE,
35 Gew.-% der zuvor beschriebenen Carbonfasern enthaltenden Polyphenylensulfidpartikel und
2 Gew.-% Graphit.

Die Mischung wurde dann bei 370°C für 3 Stunden zu einem Verbundwerkstoff verarbeitet und dann auf Raumtemperatur abgekühlt. Der so hergestellte Verbundwerkstoff zeichnete sich durch eine hervorragende Haftung der Carbonfasern enthaltenden Polyphenylensulfidpartikel mit PTFE aus.

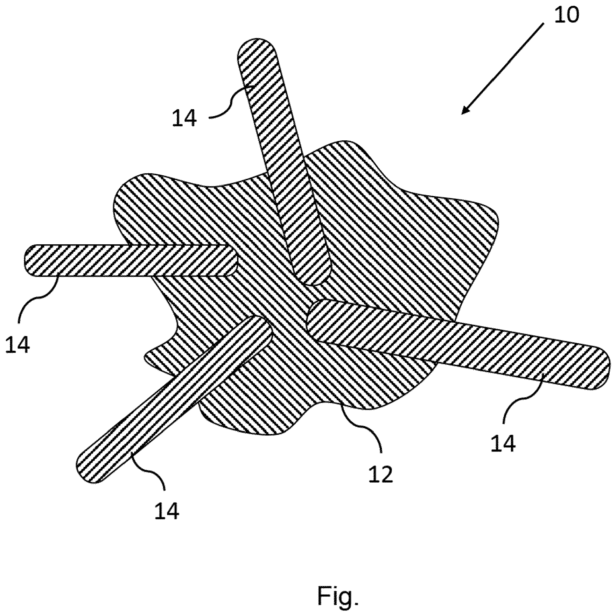

## Patentansprüche

1. Fasern enthaltendes Füllstoffpartikel, bei dem zwei oder mehr Fasern zumindest teilweise in einem Feststoffpartikel aus einem Polymer ausgewählt aus der Gruppe bestehend aus Polyphenylensulfiden, flüssigkristallinen Polymeren, Polyphenylensulfonen, Polyethersulfonen, thermoplastischen Polyimiden, Polyamidimiden, Epoxyharzen, Perfluoralkoxypolymer und beliebigen Mischungen aus zwei oder mehr der vorgenannten Polymere eingeschlossen sind, wobei zumindest ein Teil der Fasern mit ihrem dem in das Feststoffpartikel eingeschlossenen Ende gegenüberstehenden Ende aus dem Feststoffpartikel herausragen, wobei das Fasern enthaltende Füllstoffpartikel eine maximale Längsausdehnung von 1000 µm aufweist und die Fasern eine Dicke von maximal 100 µm aufweisen.

2. Fasern enthaltendes Füllstoffpartikel nach Anspruch 1,
**dadurch gekennzeichnet, dass**
das Feststoffpartikel als Polymer Polyphenylensulfid enthält.

3. Fasern enthaltendes Füllstoffpartikel nach Anspruch 2,
**dadurch gekennzeichnet, dass**
das Feststoffpartikel als Polymer vernetztes Polyphenylensulfid enthält.

4. Fasern enthaltendes Füllstoffpartikel nach zumindest einem der vorstehenden Ansprüche,
**dadurch gekennzeichnet, dass**
in diesen mehr als 2, bevorzugt mehr als 5 und besonders bevorzugt mehr als 10 Fasern teilweise eingeschlossen sind.

5. Fasern enthaltendes Füllstoffpartikel nach zumindest einem der vorstehenden Ansprüche,
**dadurch gekennzeichnet, dass**
die Fasern aus der Gruppe ausgewählt sind, die aus Carbonfasern, Glasfasern, Polymerfasern, Keramikfasern, Metallfasern und beliebigen Mischungen aus zwei oder mehr der vorgenannten Fasern besteht.

6. Fasern enthaltendes Füllstoffpartikel nach zumindest einem der vorstehenden Ansprüche,
**dadurch gekennzeichnet, dass**
die Fasern Carbonfasern sind.

7. Fasern enthaltendes Füllstoffpartikel nach zumindest einem der vorstehenden Ansprüche,
**dadurch gekennzeichnet, dass**
die Fasern eine Dicke von 1 bis 100 µm, bevorzugt von 2 bis 75 µm, besonders bevorzugt von 5 bis 50 µm und ganz besonders bevorzugt von 6 bis 20 µm aufweisen.

8. Fasern enthaltendes Füllstoffpartikel nach zumindest einem der vorstehenden Ansprüche,
**dadurch gekennzeichnet, dass**
zumindest ein Teil der Fasern mit ihrem dem in das Feststoffpartikel eingeschlossenen Ende gegenüberstehenden Ende um 1 bis 100 µm und bevorzugt um 10 bis 50 µm aus dem Feststoffpartikel herausragen.

9. Fasern enthaltendes Füllstoffpartikel nach zumindest einem der vorstehenden Ansprüche,
**dadurch gekennzeichnet, dass**
mindestens 2, bevorzugt mindestens 5 und besonders bevorzugt mindestens 10 Fasern mit ihrem dem in das Feststoffpartikel eingeschlossenen Ende gegenüberstehenden Ende aus dem Feststoffpartikel herausragen.

10. Fasern enthaltendes Füllstoffpartikel nach zumindest einem der vorstehenden Ansprüche,
**dadurch gekennzeichnet, dass**
das Fasern enthaltende Füllstoffpartikel eine maximale Länge von 1 bis 1000 µm, bevorzugt von 5 bis 500 µm und besonders bevorzugt von 10 bis 200 µm aufweist.

11. Verbundwerkstoff aus einer Matrix aus Polytetrafluorethylen, wobei der Verbundwerkstoff in der Matrix Fasern enthaltende Füllstoffpartikel nach einem der vorstehenden Ansprüche enthält.

12. Verfahren zum Herstellen von Fasern enthaltenden Füllstoffpartikel nach zumindest einem der Ansprüche 1 bis 10, welches die folgenden Schritte umfasst:
a) Vermischen von Fasern mit einer Dicke von maximal 100 µm mit einem Polymer ausgewählt aus der Gruppe bestehend aus Polyphenylensulfiden, flüssigkristallinen Polymeren, Polyphenylensulfonen, Polyethersulfonen, thermoplastischen Polyimiden, Polyamidimiden, Epoxyharzen, Perfluoralkoxypolymer und beliebigen Mischungen aus zwei oder mehr der vorgenannten Polymere, wobei die Fasern einen höheren Schmelzpunkt aufweisen als das Polymer, um eine Faser-Polymer-Mischung zu erhalten,
b1) Schmelzen der in dem Schritt a) erhaltenen Faser-Polymer-Mischung auf eine Temperatur, die oberhalb der Schmelztemperatur des Polymers, aber unterhalb der Schmelztemperatur der Fasern liegt, um eine Faser-Schmelz-Mischung zu erhalten, oder
b2) Aushärten der Polymerkomponenten der in Schritt a) erhaltenen Faser-Polymer-Mischung durch chemische Reaktion zu einem Faser-Polymer-Komposit,
c) ggf. Abkühlen des in dem Schritt b1) oder b2) erhaltenen Faser-Polymer-Komposit, und
d) Zerkleinern des in dem Schritt c) erhaltenen Faser-Polymer-Komposits zu Fasern enthaltenden Füllstoffpartikeln mit einer maximalen Länge von 1000 µm.

13. Verfahren nach Anspruch 12,
**dadurch gekennzeichnet, dass**
in dem Schritt a) als Polymer ein Polyphenylensulfid eingesetzt wird und die Verfahrensschritte b1), c) und d) unter Luftatmosphäre durchgeführt werden, so dass das Polyphenylensulfid vernetzt.

14. Verfahren nach Anspruch 12 oder 13,
**dadurch gekennzeichnet, dass**
das Faser-Polymer-Komposit in dem Schritt c) zu Fasern enthaltenden Füllstoffpartikeln mit einer maximalen Längsausdehnung von 1 bis 1000 µm, bevorzugt von 5 bis 500 µm und besonders bevorzugt von 10 bis 200 µm zerkleinert wird.

15. Verfahren nach zumindest einem der Ansprüche 12 bis 14,
**dadurch gekennzeichnet, dass**
das Zerkleinern des Faser-Polymer-Komposits in dem Schritt c) durch Mahlen oder bevorzugt durch Zerschlagen durchgeführt wird.

## Claims

1. A fiber-containing filler particle in which two or more fibers are at least partly enclosed in a solid particle comprising a polymer selected from the group consisting of polyphenylene sulfides, liquid-crystalline polymers, polyphenylene sulfones, polyether sulfones, thermoplastic polyimides, polyamidimides, epoxy resins, perfluoroalkoxy polymers and any mixtures of two or more of the abovementioned polymers, wherein the end of at least part of the fibers opposite the end enclosed in the solid particle projects from the solid particle and the fiber-containing filler particle has a maximum longitudinal dimension of 1000 µm and the fibers have a thickness of not more than 100 µm.

2. The fiber-containing filler particle as claimed in claim 1,
**characterized in that**
the solid particle contains polyphenylene sulfide as polymer.

3. The fiber-containing filler particle as claimed in claim 2,
**characterized in that**
the solid particle contains crosslinked polyphenylene sulfide as polymer.

4. The fiber-containing filler particle as claimed in at least one of the preceding claims,
**characterized in that**
more than 2, preferably more than 5 and particularly preferably more than 10, fibers are partly enclosed therein.

5. The fiber-containing filler particle as claimed in at least one of the preceding claims,
**characterized in that**
the fibers are selected from the group consisting of carbon fibers, glass fibers, polymer fibers, ceramic fibers, metal fibers and any mixtures of two or more of the abovementioned fibers.

6. The fiber-containing filler particle as claimed in at least one of the preceding claims,
**characterized in that**
the fibers are carbon fibers.

7. The fiber-containing filler particle as claimed in at least one of the preceding claims,
**characterized in that**
the fibers have a thickness of from 1 to 100 µm, preferably from 2 to 75 µm, particularly preferably from 5 to 50 µm and very particularly preferably from 6 to 20 µm.

8. The fiber-containing filler particle as claimed in at least one of the preceding claims,
**characterized in that**
the end of at least part of the fibers opposite the end enclosed in the solid particle projects from 1 to 100 µm and preferably from 10 to 50 µm from the solid particle.

9. The fiber-containing filler particle as claimed in at least one of the preceding claims,
**characterized in that**
the end of at least 2, preferably at least 5 and particularly preferably at least 10, fibers opposite the end enclosed in the solid particle projects from the solid particle.

10. The fiber-containing filler particle as claimed in at least one of the preceding claims,
**characterized in that**
the fiber-containing filler particle has a maximum length of from 1 to 1000 µm, preferably from 5 to 500 µm and particularly preferably from 10 to 200 µm.

11. A composite material comprising a matrix composed of polytetrafluoroethylene, wherein the composite material contains fiber-containing filler particles as claimed in any of the preceding claims in the matrix.

12. A process for producing fiber-containing filler particles as claimed in at least one of claims 1 to 10, which comprises the following steps:
a) mixing of fibers having a thickness of not more than 100 µm with a polymer selected from the group consisting of polyphenylene sulfides, liquid-crystalline polymers, polyphenylene sulfones, polyether sulfones, thermoplastic polyimides, polyamidimides, epoxy resins, perfluoroalkoxy polymers and any mixtures of two or more of the abovementioned polymers, where the fibers have a higher melting point than the polymer, to give a fiber-polymer mixture,
b1) melting of the fiber-polymer mixture obtained in step a) at a temperature which is above the melting point of the polymer but below the melting point of the fibers to give a fiber-melt mixture, or
b2) curing of the polymer components of the fiber-polymer mixture obtained in step a) by chemical reaction to give a fiber-polymer composite,
c) optionally cooling of the fiber-polymer composite obtained in step b1) or b2), and
d) comminution of the fiber-polymer composite obtained in step c) to give fiber-containing filler particles having a maximum length of 1000 µm.

13. The process as claimed in claim 12,
**characterized in that**
a polyphenylene sulfide is used as polymer in step a) and process steps b1), c) and d) are carried out under an air atmosphere so that the polyphenylene sulfide crosslinks.

14. The process as claimed in claim 12 or 13,
**characterized in that**
the fiber-polymer composite is comminuted in step c) to give fiber-containing filler particles having a maximum longitudinal dimension of from 1 to 1000 µm, preferably from 5 to 500 µm and particularly preferably from 10 to 200 µm.

15. The process as claimed in at least one of claims 12 to 14,
**characterized in that**
comminution of the fiber-polymer composite in step c) is carried out by milling or preferably by crushing.

## Revendications

1. Particule de charge contenant des fibres, deux ou davantage de fibres étant au moins partiellement incluses dans une particule solide en un polymère choisi dans le groupe constitué par les polysulfures de phénylène, les polymères cristallins liquides, les polyphénylène-sulfones, les polyéther-sulfones, les polyimides thermoplastiques, les polyamide-imides, les résines époxy, le polymère perfluoroalcoxy et les mélanges quelconques de deux ou davantage des polymères susmentionnés, au moins une partie des fibres dépassant de la particule solide avec leur extrémité opposée à l'extrémité incluse dans la particule solide, la particule de charge contenant des fibres présentant une dimension longitudinale maximale de 1 000 µm, et les fibres présentant une épaisseur d'au plus 100 µm.

2. Particule de charge contenant des fibres selon la revendication 1, **caractérisée en ce que** la particule solide contient du polysulfure de phénylène en tant que polymère.

3. Particule de charge contenant des fibres selon la revendication 2, **caractérisée en ce que** la particule solide contient du polysulfure de phénylène réticulé en tant que polymère.

4. Particule de charge contenant des fibres selon au moins l'une quelconque des revendications précédentes, **caractérisée en ce que** plus de 2, de préférence plus de 5 et de manière particulièrement préférée plus de 10 fibres sont partiellement incluses dans celle-ci.

5. Particule de charge contenant des fibres selon au moins l'une quelconque des revendications précédentes, **caractérisée en ce que** les fibres sont choisies dans le groupe constitué par les fibres de carbone, les fibres de verre, les fibres de polymère, les fibres de céramique, les fibres métalliques et les mélanges quelconques de deux ou davantage des fibres susmentionnées.

6. Particule de charge contenant des fibres selon au moins l'une quelconque des revendications précédentes, **caractérisée en ce que** les fibres sont des fibres de carbone.

7. Particule de charge contenant des fibres selon au moins l'une quelconque des revendications précédentes, **caractérisée en ce que** les fibres présentent une épaisseur de 1 à 100 µm, de préférence de 2 à 75 µm, de manière particulièrement préférée de 5 à 50 µm, et de manière tout particulièrement préférée de 6 à 20 µm.

8. Particule de charge contenant des fibres selon au moins l'une quelconque des revendications précédentes, **caractérisée en ce qu'**au moins une partie des fibres dépassent de 1 à 100 µm et de préférence de 10 à 50 µm de la particule solide avec leur extrémité opposée à l'extrémité incluse dans la particule solide.

9. Particule de charge contenant des fibres selon au moins l'une quelconque des revendications précédentes, **caractérisée en ce qu'**au moins 2, de préférence au moins 5 et de manière particulièrement préférée au moins 10 fibres dépassent de la particule solide avec leur extrémité opposée à l'extrémité incluse dans la particule solide.

10. Particule de charge contenant des fibres selon au moins l'une quelconque des revendications précédentes, **caractérisée en ce que** la particule de charge contenant des fibres présente une longueur maximale de 1 à 1 000 µm, de préférence de 5 à 500 µm et de manière particulièrement préférée de 10 à 200 µm.

11. Matériau composé constitué par une matrice en polytétrafluoroéthylène, le matériau composé contenant dans la matrice des particules de charge contenant des fibres selon l'une quelconque des revendications précédentes.

12. Procédé de fabrication de particules de charge contenant des fibres selon au moins l'une quelconque des revendications 1 à 10, qui comprend les étapes suivantes :
a) le mélange de fibres ayant une épaisseur d'au plus 100 µm avec un polymère choisi dans le groupe constitué par les polysulfures de phénylène, les polymères cristallins liquides, les polyphénylène-sulfones, les polyéther-sulfones, les polyimides thermoplastiques, les polyamide-imides, les résines époxy, le polymère perfluoroalcoxy et les mélanges quelconques de deux ou davantage des polymères susmentionnés, les fibres présentant un point de fusion plus élevé que le polymère, afin d'obtenir un mélange fibres-polymère,
b1) la fusion du mélange fibres-polymère obtenu à l'étape a) à une température qui est située au-dessus de la température de fusion du polymère, mais en dessous de la température de fusion des fibres, afin d'obtenir un mélange fibres-masse fondue, ou
b2) le durcissement des composants polymères du mélange fibres-polymère obtenu à l'étape a) par réaction chimique en un composite fibres-polymère,
c) éventuellement le refroidissement du composite fibres-polymère obtenu à l'étape b1) ou b2), et
d) le broyage du composite fibres-polymère obtenu à l'étape c) en particules de charge contenant des fibres ayant une longueur maximale de 1 000 µm.

13. Procédé selon la revendication 12, **caractérisé en ce qu'**à l'étape a), un polysulfure de phénylène est utilisé en tant que polymère et les étapes de procédé b1), c) et d) sont réalisées dans une atmosphère d'air, de telle sorte que le polysulfure de phénylène réticule.

14. Procédé selon la revendication 12 ou 13, **caractérisé en ce que** le composite fibres-polymère est broyé à l'étape c) en particules de charge contenant des fibres ayant une dimension longitudinale maximale de 1 à 1 000 µm, de préférence de 5 à 500 µm et de manière particulièrement préférée de 10 à 200 µm.

15. Procédé selon au moins l'une quelconque des revendications 12 à 14, **caractérisé en ce que** le broyage du composite fibres-polymère à l'étape c) est réalisé par meulage ou de préférence par fragmentation.
